(19) **Europäisches Patentamt**
**European Patent Office**
**Office européen des brevets**

(11) **EP 3 671 314 B1**

(12) **EUROPEAN PATENT SPECIFICATION**

(45) Date of publication and mention
of the grant of the patent:
**22.05.2024   Bulletin 2024/21**

(21) Application number: **18215474.0**

(22) Date of filing: **21.12.2018**

(51) International Patent Classification (IPC):
**G02B 27/01** (2006.01)    **G02B 27/00** (2006.01)
**G02B 5/18** (2006.01)    **G02B 6/00** (2006.01)
**G02B 5/32** (2006.01)    **F21V 8/00** (2006.01)
**G02B 6/34** (2006.01)    **G02B 1/11** (2015.01)
**G02B 5/00** (2006.01)

(52) Cooperative Patent Classification (CPC):
**G02B 5/1814; G02B 1/11; G02B 5/003;**
**G02B 5/1809; G02B 6/0035; G02B 27/0018;**
**G02B 27/0103;** G02B 6/0046; G02B 2027/012

(54) **LUMINOUS DEVICE FOR VEHICLE WITH OPTICAL AXIS ADJUSTMENT**

LEUCHTVORRICHTUNG FÜR FAHRZEUG MIT ANPASSUNG DER OPTISCHEN ACHSE

DISPOSITIF LUMINEUX POUR VÉHICULE À RÉGLAGE DE L'AXE OPTIQUE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**24.06.2020   Bulletin 2020/26**

(73) Proprietor: **Valeo Vision**
**93012 Bobigny Cedex (FR)**

(72) Inventors:
 • **LE CORRE, Jérôme**
  **93012 BOBIGNY Cedex (FR)**
 • **LIARD, Laurent**
  **93012 BOBIGNY Cedex (FR)**
 • **RASOLDIER, Nirina**
  **93012 BOBIGNY Cedex (FR)**
 • **ROBERT, Arnaud**
  **93012 BOBIGNY Cedex (FR)**
 • **TCHAPDA, Gilles**
  **93012 BOBIGNY Cedex (FR)**

(74) Representative: **Valeo Visibility**
**Service Propriété Industrielle**
**c/o Valeo Vision**
**34, rue Saint André**
**93012 Bobigny (FR)**

(56) References cited:
 EP-A1- 3 073 313      EP-A1- 3 342 641
 WO-A1-01/09663       JP-A- H03 297 003
 US-A1- 2006 215 244   US-A1- 2011 310 491
 US-A1- 2014 293 759   US-A1- 2015 138 646
 US-A1- 2016 327 705   US-A1- 2018 067 251

**Description**

**TECHNICAL FIELD**

The present invention relates to a luminous device for an automobile, and more particularly to a luminous device for an automobile, producing holographic 3D lighting effect.

**STATE OF THE ART**

The document EP 3342641 A1 discloses a known luminous device for vehicle.

Automotive lighting are going through a sea of changes and moving ahead in terms of styling and efficiency due to the advancement of technology. There are many types of advance lighting system available in the market, one among them being holographic of 3D lighting system. In these lighting systems the holographic 3D effect is created by a diffractive structure. Each pixel of this structure is supposed to see only light rays with given incidence angles, calculated with respect to the system geometry and based on the same light is diffracted to form a specific holographic 3D effect.

The angle of incidence of the light rays plays an important role in the creation of these holographic 3D effects. Yet, parasite reflection on the light guide plate edges generate rays with non desired incidence angles on the gratings, which creates ghost images and therefore decrease the perceived quality. Many efforts are made to reduce the ghost image effects in such devices especially in HUD systems. These systems are complex in nature and in some cases also degrade the quality of the final output.

**SUMMARY OF THE INVENTION**

An object of the present invention is to solve at least partially the disadvantages described above of known lighting devices. In particular, it is the object of the present invention to provide a luminous device with a holographic 3D effect for automotive vehicles lighting.

Another object of the invention is to provide a luminous device producing holographic 3D effect with a ghost image effect reduction system.

According to an embodiment of the present invention, there is provided a luminous device for an automotive vehicle as defined in claim 1.

According to a no limiting embodiment the size of the patterned portion is few mm to few tens of mm.

According to a the invention, the patterned portion comports a plurality of small zones, having preferably a form of a disk. The size of each small zone is 5 to 50$\mu$m, preferably 5 to 15$\mu$m. If they have a form of a disk, the size corresponds to the diameter of said disk.

According to the invention, each small zone consist into a binary grating formed by a plurality of patterns arranged along one direction. In this direction the patterns have a size of an order of magnitude of the wavelength of light rays. In the perpendicular direction the size of the patterns is similar to the size or diameter of the small zone.

According to a no limiting embodiment of the present invention, guiding face of the surface guide of the luminous device propagates the at least one part of the light rays emitted by the at least one light source by means of internal reflection towards the patterned portion.

According to a no limiting embodiment of the present invention, the at least one peripheral face of the surface guide is provided and/or made with one or more layer of light absorbing materials. This characteristic allows reducing ghost images.

According to a no limiting embodiment of the present invention, the at least one peripheral face of the surface guide is provided with pattern and/ or grained interface to reflect light away from the patterned portion and towards the absorbing coating and therefore absorbed. This characteristic increases the quantity of rays transferred into the one or more layer of light absorbing materials, and therefore absorbed by this one or more layer. It reduces the ghost images.

According the present invention, the at least one light source has a light emission axis. Preferably, this emission axis is oriented toward a light input face of the surface guide.

According to the present invention, the at least one peripheral face of the surface guide is arranged to form an oblique angle with the emission axis of the at least one light source.

According to the present invention, the angle of the peripheral face with the emission axis of the at least one light source is more than or equal to the maximum angle of the refracted light rays inside the surface guide.

According to a no limiting embodiment of the present invention, the angle of the peripheral face with the emission axis of the at least one light source is between 40° to 50°, preferably between 45° to 50°.

According to a no limiting embodiment of the present invention, the peripheral face opposite to the at least one light source is provided and/ or made with light absorbing material.

According to a no limiting embodiment of the present invention, the light absorbing material is painted and / or coated and/ or overmoulded and/ or glued to the peripheral face of the guiding surface.

According to a no limiting embodiment of the present invention, the layer of light absorbing material is opaque and/ or dark and/ or matt black.

According to a no limiting embodiment of the present invention, the patterned portion of the surface guide is a diffractive structure for diffracting light rays to create holographic image.

According to a no limiting embodiment of the present invention, the surface guide is placed in an encapsulated structure comprising; patterned portion at least one transparent face opposite to the patterned portion and an opaque and/ or matt black area.

According to a no limiting embodiment of the present invention, the at least one transparent face of the encapsulated structure is coated with antireflection material.

## BRIEF DESCRIPTION OF THE INVENTION

To complete the description and to provide a better understanding of the invention, a set of drawings is provided. Said drawings form an integral part of the description and illustrate an embodiment of the invention, which should not be construed as restricting the scope of the invention, but only as an example of how the invention can be carried out. The drawings comprise the following characteristics.

Figure 1 shows a perspective view of a luminous device comprising surface guide assembled along with a light source.

Figure 2 shows a top view of a luminous device comprising a surface guide comprising a patterned portion, the embodiment of Fig. 2 is not an embodiment of the present invention.

Figure 3 depicts a luminous device shown in Figure 2 depicting the direction of incident light rays.

Figure 4 shows a luminous device comprising a surface guide depicting the direction of incident light rays, according to an embodiment of the present invention.

Figure 5a depicts the patterned portion of the luminous device shown in Figure 2, according to an embodiment of the present invention.

Figure 5b shows transversal cross section of patterns of the patterned portion of luminous device shown in Figure 2 and Figure 5a.

## DETAILED DESCRIPTION OF THE INVENTION

Hereinafter, embodiments of the present invention will be described with reference to the accompanying drawings.

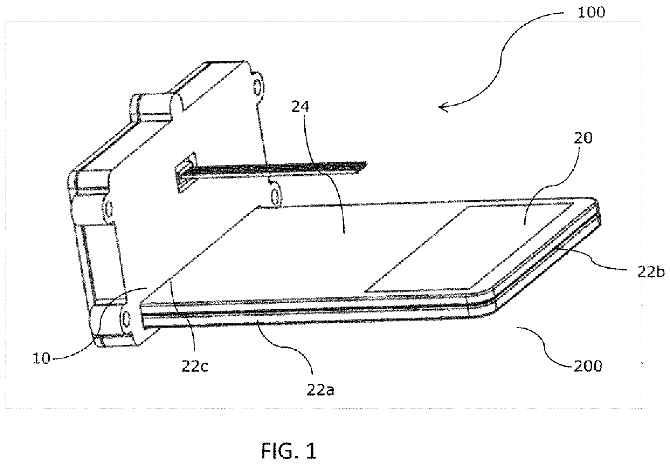

Figure 1 shows a perspective view of a luminous device comprising a light source such LEDs and a surface guide.

The luminous device (100) shown in Figure 1 comprises a light source (10) and a surface guide (200) for producing a holographic lighting effect for a vehicle. In such lighting system to avoid the ghost image, the luminous device (100) of present subject matter is provided with provisions for reducing ghost image prevention system.

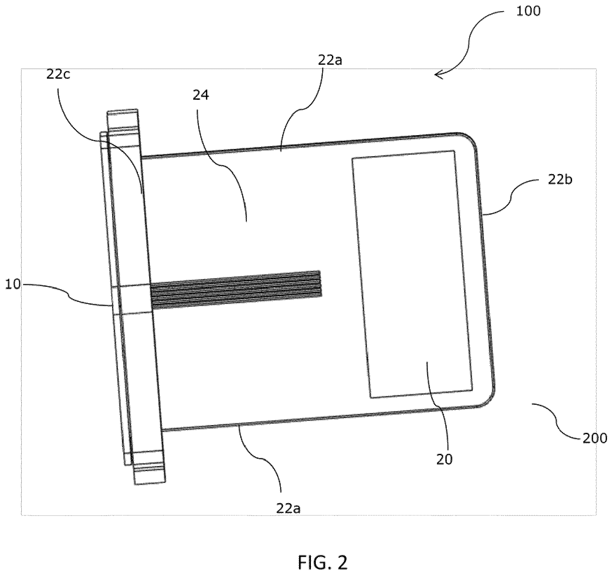

Figure 2 shows a top view a luminous device (100) comprising a surface guide (200) along with a light source (10).

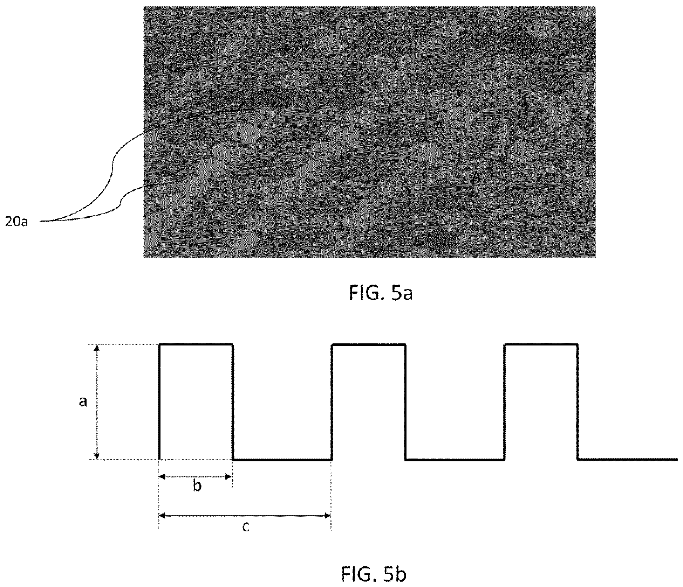

The surface guide (200) is a light guide with a small thickness compared to its length and width. It can be curved and follow a given curve. The surface guide comprises two extended faces, separated by a peripheral faces (22a, 22b, 22c), these peripheral faces (22a, 22b, 22c) defines the thickness of the surface guide (200). The surface guide of the present invention comprises a peripheral light input face (22c), two peripheral lateral faces (22a), and one extremity peripheral face (22b), opposite the light input face. The thickness may vary, for example it may decrease from one extremity to another extremity. These extended faces form guiding faces (24), delimiting a zone of propagation of the light rays, by total internal reflection on these faces. The surface guide (200) further comprises a patterned portion (20). The patterned portion (20) is made of multiple nanostructures with different and varying patterns (shown in Figure 5a). These nanostructures have predetermined and pre-calculated pattern based on the design requirement. A light source (10) is provided at one end of the surface guide (200). The light source (10) emits multiple light rays into the surface guide at a predetermined angle and towards the patterned portion (20). The light rays propagate inside the surface guide (200) by total internal reflection and are incident on the nanostructures of the patterned portion (20). The internal reflection is caused along the guiding face (24) of the surface guide (200). The nanostructures of the patterned portion (20) reflect and/or diffract the incident light at various angles producing a holographic or 3D lighting effect. There are some possibilities of undesired internal reflections in the surface guide (200) along the peripheral faces (22a, 22b, 22c). These undesired internal reflections causes light rays to fall in the nanostructures of the patterned portion (20) at an undesired angle thus creating unintended images called ghost images which decrease the sharpness of the image, or create multiplication of the images.

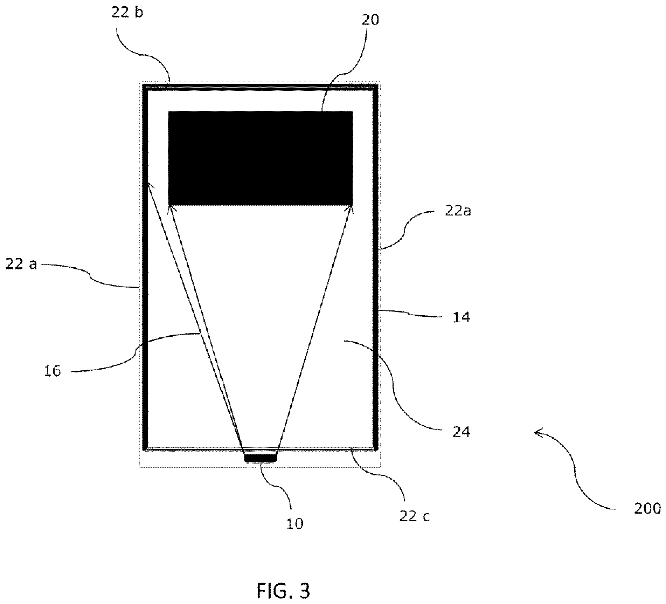

Figure 3 shows a luminous device (100). The Figure shows the direction of incident light rays (16) emitted by the light source (10). As per the embodiment of the invention, a layer of light absorbing material (14) is applied along the peripheral faces (22a, 22b, 22c) of the surface guide (200). The layer of light absorbing material (14) reflects only a small portion of the incident light flux and absorbs most of the incident light flux. Typically, the reflection coefficient is below 10%, and preferably below 5%.

Additionally, it is preferable to have a layer of light absorbing material with diffuse reflected light properties (instead of specular), so that the light ray with a given incidence angle will be split in several reflected angles with a lower energy, therefore lowering even more the ghost images. The layer of light absorbing material is either applied by painting, overmoulding, gluing, and/ or is a form of foam. In preferred characteristics of an embodiment according to the present invention, the peripheral faces (22a, 22b, 22c) may be made opaque and/ or at least dark, matt black surface. Also, it is possible to provide the peripheral faces (22a, 22b, 22c) with grained interface, and/ or interface with structures in order to help the light to go through the interface into the dark material. The above mentioned options and material can be applied at least onto three peripheral faces, i.e. the peripheral lateral faces (22a) and the extremity peripheral face (22b). Optionally, it may be applied on the peripheral light input face (22c) in front of which the light source (10), such as LEDs, is placed. In this case an opening is provided in the material to allow the light to enter into the surface guide (200).

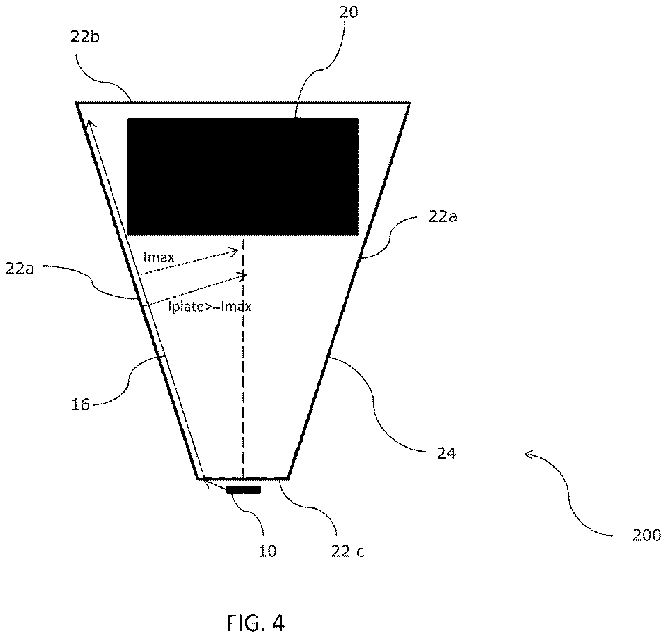

Figure 4 shows an embodiment of the present invention wherein the surface guide (200) is designed with a specific shape. As per the embodiment of the invention the peripheral lateral faces (22a), adjacent to the peripheral light input face (22c) of the surface guide (200), form an oblique angle according to the central emission axis of the light source (10) such as LEDs. The angle is linked to the maximum angle of the incident light rays from the light source (10) (LEDs) with an additional margin, preferably of about 5°.

Given a light source with a light intensity emission profile, and a light surface guide (200) with an optical index of n, when the light is coupled inside the plate, is refracted following Snell's law. The maximum angle of the refracted light inside the plate will hence be;

$$imax = arcsin(sin(i0)/n)$$

where i0 is the highest incidence angle of rays emitted by the light source and reaching the peripheral light input face, and n the refraction index of the material of the surface guide. At maximum it will be 90°, and in general it is below 90° because the distance between the light source and the light input face forces a maximum angle below 90°. Hence, the surface guide (200) is created with the peripheral lateral faces (22a) at an angle equal to or greater than imax (as calculated above). The peripheral lateral faces (22a) of the surface guide (200) thus created avoids the creation of ghost images.

Figure 5a shows the nanostructures of the patterned portion (20) of the surface guide (200) in accordance to the embodiments of the present invention. The nanostructure pattern is made as per the order of magnitude of the wavelength based on the design. The patterned portion according to the embodiment of the present invention has 3 levels of size (as mentioned below):

> 1. Patterned portion: size is few mm to few tens of mm.
> 2. Inside the patterned portion: plurality of circular small zones (20a) having a diameter of 5 to 50$\mu$m, preferably 5 to 15$\mu$m.
> 3. Each small zone consists into a binary grating formed by a plurality of pattern arranged along one direction. In this direction the pattern has a size of an order of magnitude of the wavelength of light rays. In the perpendicular direction the size of the pattern is similar to the diameter of the small zone.

In another embodiment the small zones (20a) may have another form, as polygonal or elliptic. It this case the larger dimension of the form is 5 to 50$\mu$m, preferably 5 to 15$\mu$m.

Figure 5b depicts transversal cross section along the A-A as shown in Figure 5a of one pattern of the nanostructure pattern of the patterned portion (20). Referring to the Figure 5b which is a schematic view of a section of one nanostructure consisting in a binary grating i.e. with 2 levels:

- if λ is the peak wavelength of the light source, then :

    a is between 0.1λ and 1λ,

    b is between 0.2λ and 3λ

    c is between 0.2λ and 3λ

Where, a is the depth of the grating

    b is the size of the part of the nanostructure at the high level of the grating, in the direction of the section.

    c is the size of one nanostructure in the direction of the section

    λ is the wavelength of the light emitted by the light source.

Note that the pattern is adapted to a specific wavelength.

Generally, b and c do not have the same value and c is greater than b.

In another embodiment of the present invention, the surface guide (200) having peripheral lateral faces (22a) with an oblique angle is provided with a dark material applied at least on the extremity peripheral face (22b) opposite to the light source (10). Similarly, in another embodiment of the present invention the peripheral lateral faces (22a) are made with an oblique angle in accordance with the embodiment of Figure 4 and is also provided with a layer of light absorbing material (and other solutions) in accordance with the embodiment of Figure 3.

In yet another embodiment of the present invention, the surface guide (200) and especially the patterned portion (20) is provided with an encapsulation device, and the surface guide (200) is placed inside it. The encapsulation device is transparent in front of the nanostructures of the patterned portion, preferably in front of the guiding face being on the same side as the nanostructures and optionally on both guiding faces (20 and is opaque everywhere else in order to limit ghost images. Optionally the transparent faces are coated with an antireflection coating (on both sides of each face).

**Claims**

1. A luminous device (100) for an automotive vehicle comprising:

   at least one light source (10) configured for emitting light rays;
   a surface guide (200) comprising;
   a patterned portion (20), wherein the patterned portion (20) comprises patterns having a size of an order of magnitude of the wavelength of light rays;
   at least one peripheral face (22a, 22b, 22c) and at least one guiding face (24), configured for guiding towards the said patterned portion at least one part of the light rays emitted by the at least one light source (10);
   wherein the at least one peripheral face (22a, 22b, 22c) of the surface guide (200) is configured for preventing propagation of light rays from said peripheral face (22a, 22b, 22c) toward said patterned portion (20); and
   **characterized in that** the patterned portion comports a plurality of small zones,
   wherein each small zone consists into a binary grating formed by a plurality of said patterns arranged along one direction wherein it is in this said one direction that the patterns have a size of an order of magnitude of the wavelength of the light rays,
   and **in that** the at least one peripheral lateral face (22a) of the surface guide (200) is arranged to form an oblique angle with the emission axis of the least one light source (10), wherein the angle of the peripheral lateral face (22a) with the emission axis of the least one light source is more than or equal to the maximum angle of the refracted light rays inside the surface guide (200).

2. The luminous device (100) as claimed in claim 1, wherein the guiding face of the surface guide (200) propagates the at least one part of the light rays emitted by the at least one light source by means of internal reflection towards the patterned portion (20).

3. The luminous device (100) as claimed in claim 1 or 2, wherein the at least one peripheral face (22a, 22b, 22c) of the surface guide (200) is provided and/or made with one or more layer of light absorbing materials.

4. The luminous device (100) as claimed in any of claims 1 to 3, wherein the at least one peripheral face (22 a, 22b, 22c) of the surface guide (200) is provided with pattern and/ or grained interface to reflect light away from the patterned portion (20) and towards the absorbing coating and therefore absorbed.

5. The luminous device (100) as claimed in any of the preceding claims, wherein the angle of the peripheral lateral face (22a) with the emission axis of the least one light source is between 40° to 50°, preferably between 45° to 50°.

6. The luminous device (100) as claimed in claim 3, or any of claims 1 or 2 or 4 or 5, combined with claim 3, wherein the extremity peripheral face (22b) opposite to the at least one light source (10) is provided and/ or made with light absorbing material.

7. The luminous device (100) as claimed in claim 3, or any of claims 4 to 6, combined with claim 3, wherein the light absorbing material is painted and / or coated and/ or overmoulded and/ or glued to the at least one peripheral faces (22a, 22b, 22c) of the guiding surface.

8. The luminous device (100) as claimed in claim 3, or any of claims 4 to 7, combined with claim 3, wherein the layer of light absorbing material is opaque and/ or dark and/ or matt black.

9. The luminous device (100) as claimed in any of the preceding claims wherein the patterned portion (20) of the surface guide (200) is a diffractive structure diffracting light rays to create holographic image.

10. The luminous device (100) as claimed in any of the preceding claims , wherein the surface guide (200) is placed in an encapsulated structure comprising; patterned portion (20)at least one transparent face opposite to the patterned portion (20) and an opaque and/ or matt black area.

11. The luminous device (100) as claimed in claim 10, wherein the at least one transparent face of the encapsulated structure is coated with antireflection material.

**Patentansprüche**

1. Leuchtvorrichtung (100) für ein Kraftfahrzeug, umfassend:

   mindestens eine Lichtquelle (10), die zum Emittieren von Lichtstrahlen ausgelegt ist;
   einen Oberflächenleiter (200), umfassend:

   einen strukturierten Abschnitt (20), wobei der strukturierte Abschnitt (20) Strukturierungen mit einer Größe in der Größenordnung der Wellenlänge von Lichtstrahlen umfasst;

mindestens eine periphere Fläche (22a, 22b, 22c) und mindestens eine leitende Fläche (24), die zum Leiten in Richtung des strukturierten Abschnitts ausgelegt ist, wobei mindestens ein Teil der Lichtstrahlen durch die mindestens eine Lichtquelle (10) emittiert wird;

wobei die mindestens eine periphere Fläche (22a, 22b, 22c) des Oberflächenleiters (200) zum Verhindern der Propagation von Lichtstrahlen von der peripheren Fläche (22a, 22b, 22c) in Richtung des strukturierten Abschnitts (20) ausgelegt ist; und **dadurch gekennzeichnet, dass** der strukturierte Abschnitt aus einer Vielzahl von kleinen Zonen besteht,

wobei jede kleine Zone aus einem binären Gitter besteht, das durch eine Vielzahl der Strukturierungen gebildet wird, die entlang einer Richtung angeordnet sind, wobei die Strukturierungen in dieser einen Richtung eine Größer in der Größenordnung der Wellenlänge der Lichtstrahlen aufweisen, und dass die mindestens eine periphere laterale Fläche (22a) des Oberflächenleiters (200) angeordnet ist, um einen schrägen Winkel mit der Emissionsachse der mindestens einen Lichtquelle (10) zu bilden, wobei der Winkel der peripheren lateralen Fläche (22a) mit der Emissionsachse der mindestens einen Lichtquelle mehr als oder gleich dem Maximalwinkel der gebrochenen Lichtstrahlen innerhalb des Oberflächenleiters (200) ist.

2. Leuchtvorrichtung (100) nach Anspruch 1, wobei die leitende Fläche des Oberflächenleiters (200) den mindestens einen Teil der durch die mindestens eine Lichtquelle emittierten Lichtstrahlen mittels interner Reflexion in Richtung des strukturierten Abschnitts (20) propagiert.

3. Leuchtvorrichtung (100) nach Anspruch 1 oder 2, wobei die mindestens eine periphere Fläche (22a, 22b, 22c) des Oberflächenleiters (200) mit einer oder mehreren Schichten aus lichtabsorbierenden Materialien versehen und/oder daraus hergestellt ist.

4. Leuchtvorrichtung (100) nach einem der Ansprüche 1 bis 3, wobei die mindestens eine periphere Fläche (22a, 22b, 22c) des Oberflächenleiters (200) mit einer Strukturierung und/oder granulierten Grenzfläche versehen ist, um Licht von dem strukturierten Abschnitt (20) weg und in Richtung der absorbierenden Beschichtung zu reflektieren, und es dadurch absorbiert wird.

5. Leuchtvorrichtung (100) nach einem der vorstehenden Ansprüche, wobei der Winkel der peripheren lateralen Fläche (22a) mit der Emissionsachse der mindestens einen Lichtquelle zwischen 40° und 50°, vorzugsweise zwischen 45° und 50°, liegt.

6. Leuchtvorrichtung (100) nach Anspruch 3, oder einem der Ansprüche 1 oder 2 oder 4 oder 5 kombiniert mit Anspruch 3, wobei die periphere Fläche (22b) an der Extremität gegenüber der mindestens einen Lichtquelle (10) mit einem lichtabsorbierenden Material versehen und/oder daraus hergestellt ist.

7. Leuchtvorrichtung (100) nach Anspruch 3, oder einem der Ansprüche 4 bis 6 kombiniert mit Anspruch 3, wobei das lichtabsorbierende Material an der mindestens einen peripheren Fläche (22a, 22b, 22c) der leitenden Fläche gestrichen und/oder beschichtet und/oder umspritzt und/oder geklebt ist.

8. Leuchtvorrichtung (100) nach Anspruch 3, oder einem der Ansprüche 4 bis 7 kombiniert mit Anspruch 3, wobei die Schicht aus lichtabsorbierendem Material opak und/oder dunkel und/oder mattschwarz ist.

9. Leuchtvorrichtung (100) nach einem der vorstehenden Ansprüche, wobei der strukturierte Abschnitt (20) des Oberflächenleiters (200) eine Beugungsstruktur ist, die Lichtstrahlen beugt, um ein holographisches Bild zu erzeugen.

10. Leuchtvorrichtung (100) nach einem der vorstehenden Ansprüche, wobei der Oberflächenleiter (200) in eine gekapselte Struktur platziert ist, die umfasst: den strukturierten Abschnitt (20), mindestens eine transparente Fläche gegenüber dem strukturierten Abschnitt (20) und einen opaken und/oder mattschwarzen Bereich.

11. Leuchtvorrichtung (100) nach Anspruch 10, wobei die mindestens eine transparente Fläche der gekapselten Struktur mit einem Antireflexionsmaterial beschichtet ist.

**Revendications**

1. Dispositif lumineux (100) pour véhicule automobile comprenant :

au moins une source de lumière (10) configurée pour émettre des rayons lumineux ; un guide de surface (200) comprenant :

une partie à motifs (20), la partie à motifs (20) comprenant des motifs ayant une taille d'un ordre de grandeur de la longueur d'onde des rayons lumineux ; au moins une face périphérique (22a, 22b, 22c) et au moins une face de guidage (24), configurées pour guider vers ladite partie à motifs au moins une partie des rayons lumineux émis par l'au moins une source de lumière (10) ;

dans lequel l'au moins une face périphérique (22a, 22b, 22c) du guide de surface (200) est configurée pour empêcher la propagation des rayons lumineux depuis ladite face périphérique (22a, 22b, 22c) vers ladite partie à motifs (20) ; et

le dispositif étant **caractérisé en ce que** la partie à motifs comporte une pluralité de petites zones,

chaque petite zone consistant en un réseau binaire formé par une pluralité desdits motifs disposés le long d'une direction où c'est dans cette direction que les motifs ont une taille d'un ordre de grandeur de la longueur d'onde des rayons lumineux, et **en ce que** l'au moins une face latérale périphérique (22a) du guide de surface (200) est disposée de manière à former un angle oblique avec l'axe d'émission de la moindre source de l'au moins une source de lumière (10), l'angle de la face latérale périphérique (22a) avec l'axe d'émission de l'au moins une source de lumière étant supérieur ou égal à l'angle maximal des rayons lumineux réfractés à l'intérieur du guide de surface (200).

2. Dispositif lumineux (100) tel que revendiqué dans la revendication 1, dans lequel la face de guidage du guide de surface (200) propage l'au moins une partie des rayons lumineux émis par l'au moins une source de lumière par réflexion interne vers la partie à motifs (20).

3. Dispositif lumineux (100) tel que revendiqué dans la revendication 1 ou la revendication 2, dans lequel l'au moins une face périphérique (22a, 22b, 22c) du guide de surface (200) est pourvue et/ou réalisée avec une ou plusieurs couches de matériaux absorbant la lumière.

4. Dispositif lumineux (100) tel que revendiqué dans l'une quelconque des revendications 1 à 3, dans lequel l'au moins une face périphérique (22a, 22b, 22c) du guide de surface (200) est pourvue d'un motif et/ou d'une interface granuleuse pour réfléchir la lumière loin de la partie à motifs (20) et vers le revêtement absorbant où elle est donc absorbée.

5. Dispositif lumineux (100) tel que revendiqué dans l'une quelconque des revendications précédentes, dans lequel l'angle de la face latérale périphérique (22a) avec l'axe d'émission de l'au moins une source de lumière est compris entre 40° et 50°, de préférence entre 45° et 50°.

6. Dispositif lumineux (100) tel que revendiqué dans la revendication 3, ou dans l'une quelconque des revendications 1 ou 2 ou 4 ou 5, combinée à la revendication 3, dans lequel la face périphérique d'extrémité (22b) opposée à l'au moins une source de lumière (10) est pourvue et/ou réalisée avec un matériau absorbant la lumière.

7. Dispositif lumineux (100) tel que revendiqué dans la revendication 3, ou l'une quelconque des revendications 4 à 6, combinée à la revendication 3, dans lequel le matériau absorbant la lumière est peint et/ou enduit et/ou surmoulé et/ou collé sur l'au moins une face périphérique (22a, 22b, 22c) de la surface de guidage.

8. Dispositif lumineux (100) tel que revendiqué dans la revendication 3, ou l'une quelconque des revendications 4 à 7, combinée à la revendication 3, dans lequel la couche de matériau absorbant la lumière est opaque et/ou foncée et/ou noire mate.

9. Dispositif lumineux (100) tel que revendiqué dans l'une quelconque des revendications précédentes, dans lequel la partie à motifs (20) du guide de surface (200) est une structure de diffraction diffractant les rayons lumineux pour créer une image holographique.

10. Dispositif lumineux (100) tel que revendiqué dans l'une quelconque des revendications précédentes, dans lequel le guide de surface (200) est placé dans une structure encapsulée comprenant : la partie à motifs (20), au moins une face transparente opposée à la partie à motifs (20) et une zone noire mate et/ou opaque.

11. Dispositif lumineux (100) tel que revendiqué dans la revendication 10, dans lequel l'au moins une face transparente de la structure encapsulée est recouverte d'un matériau antireflet.

FIG. 1

FIG. 2

FIG. 3

FIG. 4

FIG. 5a

FIG. 5b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3342641 A1